# EUROPÄISCHE PATENTANMELDUNG

(11) **EP 3 290 898 A1**
(43) Veröffentlichungstag der Anmeldung: **07.03.2018**
(21) Anmeldenummer: 17177327.8
(22) Anmeldetag: 22.06.2017
(51) Int. Cl.: G01M 17/007, B60W 30/095, B60W 50/00

(54) **VERFAHREN ZUR SIMULATION EINER KOLLISIONSSITUATION**

(30) Priorität: 30.08.2016 DE 102016116135
(71) Anmelder: dSPACE digital signal processing and control engineering GmbH, 33102 Paderborn (DE)
(72) Erfinder: Schulte, Sebastian, 49716 Meppen (DE); Schütte, Dr, Frank, 34414 Warburg (DE); Franke, Rainer, 33178 Borchen (DE); Klustrach, Martin, 33104 Paderborn (DE)

(57) **Zusammenfassung**

Die Erfindung ist ein Verfahren zur Simulation einer Kollisionssituation zwischen zwei Fahrzeugen zum Testen eines Fahrassistenzsystems in einem Fahrsimulator oder einem Vehicle-in-the-Loop-Szenario. Einem auf einem Simulationsrechner simulierten Fellow-Fahrzeug wird eine Trajektorie zugeordnet, die durch einen Kollisionsort einer beabsichtigen Kollision zwischen dem Fellow-Fahrzeug und einem nicht von dem Simulationsrechner gesteuerten Ego-Fahrzeug führt. Dem Fellow-Fahrzeug wird weiterhin eine gewünschte Eintreffgeschwindigkeit am Kollisionsort vorgegeben. Das Fahrassistenzsystem wird eingerichtet, um mit der simulierten Umgebung in Echtzeit Daten auszutauschen und in einer Kollisionssituation das Fahrverhalten des Ego-Fahrzeugs zu beeinflussen. Der Abstand des unvorhersehbar gesteuerten Ego-Fahrzeugs zum Kollisionsort und die aktuelle Geschwindigkeit des Ego-Fahrzeugs werden zyklisch ermittelt. Für jeden Zyklus wird für das Fellow-Fahrzeug ein Sollabstand zum Kollisionsort ermittelt, den das Fellow-Fahrzeug haben müsste, um unter der Annahme des Fahrens mit der vorgegebenen Eintreffgeschwindigkeit zeitgleich mit dem Ego-Fahrzeug am Kollisionsort einzutreffen. Ein Regelkreis regelt die Geschwindigkeit des Fellow-Fahrzeugs, um die Differenz zwischen dem Sollabstand und dem tatsächlichen Abstand zu verringern.

## Beschreibung

Die Erfindung betrifft ein Verfahren zur Simulation einer Kollisionssituation zwischen zwei Fahrzeugen zum Testen eines Fahrassistenzsystems, insbesondere eines als Kraftfahrzeug-Steuergerät ausgestalteten Fahrassistenzsystems.

Fahrassistenzsysteme sind im Stand der Technik in vielfältiger Ausführung bekannt. Z.B. existieren Fahrassistenzsysteme zur Verhinderung eines Unfalls oder zur Verringerung der Unfallfolgen, wie z.B. Notbremsassistenten. Solche Assistenzsysteme sind darauf ausgelegt eine Kollisionssituation mit einem anderen Fahrzeug zu erkennen und hierauf in einer in der Programmierung oder Verschaltung hinterlegten Art und Weise zu reagieren. Z.B. Bremszylinder mit einem hydraulischen Druck noch vor einer üblicherweise später einsetzenden Reaktion eines Fahrers vorzuspannen oder auch selbsttätig Bremsungen durchzuführen.

Unter einem Fahrassistenzsystem kann im vorliegenden Fall auch ein System verstanden werden, welches völlig eigenständig ein Fahrzeug steuert, ohne dass ein Mensch eingreift. Solche Fahrassistenzsysteme werden auch als Autopilot bezeichnet.

Allgemein werden unter einem Fahrassistenzsystem im Sinne der Erfindung solche Systeme verstanden, die durch Implementation in Software und/oder Hardware in einer Datenverarbeitungsanlage in einem Kraftfahrzeug mitgeführt werden und die eingerichtet sind, in Abhängigkeit von Sensor-Messergebnissen in die Führung des Fahrzeuges durch einen Menschen einzugreifen oder sogar vollständig selbst die Kontrolle dauerhaft oder zumindest zeitweise zu übernehmen.

Ein solches System kann als elektronisches Steuergerät ausgebildet sein, das Ein- und/oder Ausgänge für Daten und/oder Signale aufweist, z.B. um Sensordaten von externen Sensoren (z.B. Abstandssensoren, wie Ultraschall- oder Radarsensoren) über die Eingänge zu beziehen und/oder um Daten oder Signale über Ausgänge an externe Aktoren oder andere Steuergeräte, z.B. an ein Bremsensteuergerät, zu übermitteln.

Assistenzsysteme dieser Art bedürfen vor dem tatsächlichen Einsatz im öffentlichen Straßenverkehr eines ausgiebigen Tests, um die einwandfreie Funktion zu überprüfen.

Allgemein ist es für den Test von Steuergeräten bekannt, "VEHIL"-Tests durchzuführen, sogenannte Vehicle-in-the-Loop-Tests. Bei einem solchen Test wird ein echtes Fahrzeug, in welchem das zu testende Steuergerät verbaut ist, auf einer Teststrecke gefahren, wobei in dem Fahrzeug ein Simulationsrechner mitgeführt wird, welcher die reale Testfahrt mit virtuellen Ereignissen oder Elementen anreichert. Dafür werden von dem Simulationsrechner an das Steuergerät Daten oder Signale übertragen, die vorliegen würden, wenn ein echtes Ereignis oder Element auftreten würde. Das zu testende Steuergerät nimmt somit das Ereignis oder Element als real war, wobei sodann eine Reaktion hierauf bei der realen Testfahrt erfolgt. Die Erfindung betrifft unter anderem auch einen solchen VEHIL-Test, bei dem das zu testende Steuergerät ein Fahrassistenzsystem ist.

Bei der Simulation einer Kollisionssituation tritt das Problem auf, sicherzustellen, dass zwei Fahrzeuge mit Sicherheit in die gewünschte Kollisionssituation geraten, die einem Test unterzogen werden soll. Dabei soll mit Bezug auf die Erfindung keine echte Kollision zwischen zwei realen Fahrzeugen erzeugt werden, sondern es soll zumindest eines der beiden Fahrzeuge, das nachfolgend als Fellow-Fahrzeug benannte Fahrzeug, ein in einer Simulationsumgebung von einem Simulationsrechner simuliertes Fahrzeug sein, das eine simulierte Fahrt durchführt, d.h. die Fahrt dieses Fellow-Fahrzeuges wird in einem anderen Fahrzeug, das nachfolgend als Ego-Fahrzeug benannt wird, simuliert, insbesondere um die Reaktion des in diesem Ego-Fahrzeug verbauten Fahrassistenzsystems auf die in der Simulationsumgebung bevorstehende Kollisionssituation zu testen.

Das konkrete technische Problem ist hier, dass das Ego-Fahrzeug aus der Sicht des anderen simulierten Fellow-Fahrzeuges eine nicht deterministische, d.h. nicht mit Sicherheit im Voraus vorhersagbare Fahrt vollzieht, somit also dem Simulationsrechner, der die Fahrt des Fellow-Fahrzeuges simuliert, nicht im Voraus bekannt ist, wie er das Fellow-Fahrzeug zu steuern hat, damit die gewünschte Kollisionssituation mit dem Ego-Fahrzeug entsteht.

In dem Fall, dass das Ego-Fahrzeug als reales Fahrzeug, wie z.B. bei eingangs genanntem VEHIL-Test oder als ebenso simuliertes Fahrzeug, von einem Menschen gesteuert wird, ist die Fahrt insoweit unvorhersehbar, dass nicht vorausgesagt werden kann, welche Lenk-, Brems- oder Beschleunigungsmanöver oder sonstigen Aktionen der Mensch vollzieht, wenn er auf den Kollisionsort zufährt, selbst dann, wenn dem Menschen der Weg vorgegeben wird, den er fahren soll. Dies gilt in gleicher Weise, wenn das Ego-Fahrzeug kein reales Fahrzeug, sondern ebenso ein simuliertes Fahrzeug ist, wobei jedoch die Fahrt des simulierten Ego-Fahrzeuges wiederum durch einen Menschen gesteuert wird, z.B. in einem Fahrsimulator.

Auch in dem Fall, dass das Ego-Fahrzeug als reales oder simuliertes Fahrzeug von einem in Software und/oder Hardware implementierten Autopiloten gesteuert wird, ist dessen Fahrt für das Fellow-Fahrzeug nicht im Voraus kalkulierbar, da das Fellow-Fahrzeug, bzw. der Simulationsrechner, der die Fahrt dieses Fellow-Fahrzeuges simuliert, keine vorausschauende Kenntnis von der sich jederzeit ändernden Fahrt des Ego-Fahrzeuges hat bzw. haben kann, da das Autopiloten-System völlig unabhängig von der Steuerung des Fellow-Fahrzeuges ist, wie es in der Realität ebenso der Fall wäre.

Unter einer Kollisionssituation wird im Sinne der Erfindung in jedem Fall verstanden, dass die beiden Fahrzeuge, Ego- und Fellow-Fahrzeug, sich bei der jeweiligen Fahrt simuliert am Kollisionsort treffen, also virtuell zusammenstoßen.

Es wird unter einer Kollisionssituation bevorzugt aber auch eine "Beinahe-Kollision" verstanden, bei der sich also die beiden Fahrzeuge entlang der jeweiligen Fahrt-Trajektorien soweit annähern, jedoch ohne zu kollidieren, dass die Annäherung eine Reaktion des zu testenden Fahrassistenzsystems auslösen müsste.

Als Kollisionsort wird nachfolgend also zumindest derjenige Ort auf der Trajektorie des Ego-Fahrzeuges verstanden, wo sich beide Fahrzeuge virtuell gleichzeitig treffen, also zusammenstoßen. Es wird auch der Ort als Kollisionsort verstanden, an dem sich das Fellow-Fahrzeug befindet, um in einem Abstand zum Ego-Fahrzeug der gewünschten zu testenden Situation (Beinahe-Kollision) zu entsprechen.

Der Kollisionsort ist bei sich kreuzenden Trajektorien der beiden Fahrzeuge bevorzugt in beiden Situationen der Kreuzungspunkt, insbesondere wobei in der Situation der "Beinahe-Kollision" sich das Fellow-Fahrzeug auf dem Kreuzungspunkt befindet und das Ego-Fahrzeug einen Abstand zum Kreuzungspunkt hat, insbesondere denjenigen Abstand bei welchem die Reaktion des Fahrassistenzsystems getestet werden soll, oder, falls sich die Fahrzeuge hiernach weiter annähern, ab welchem die Reaktion des Fahrassistenzsystems getestet werden soll.

Vor diesem Hintergrund ist es eine Aufgabe der Erfindung sicherzustellen, dass sich das simulierte Fellow-Fahrzeug in einer virtuellen Umgebung, die in dem Ego-Fahrzeug durch den Simulationsrechner simuliert wird, in Abhängigkeit der konkreten Fahrt des Ego-Fahrzeuges mit einer gewünschten Geschwindigkeit am Kollisionsort befindet.

Erfindungsgemäß wird diese Aufgabe dadurch gelöst, dass in einer durch einen Simulationsrechner simulierten Umgebung die simulierte Fahrt des simulierten Fellow-Fahrzeuges iterativ in Abhängigkeit von Fahrparametern der Fahrt des Ego-Fahrzeuges berechnet wird. Fahrparameter sind dabei bevorzugt messtechnisch durch Sensoren erfasste Fahrparameter des Ego-Fahrzeuges. Solche Sensoren können z.B. an einem realen Ego-Fahrzeug oder an einem Fahrsimulator angeordnet sein, der Fahrparameter zur Simulation des Ego-Fahrzeuges erzeugt.

Die Erfindung sieht bevorzugt vor, dass einem simulierten Fellow-Fahrzeug eine Trajektorie zugeordnet wird, auf welcher sich das Fellow-Fahrzeug bewegt und die durch einen Kollisionsort einer beabsichtigten Kollision zwischen dem Fellow-Fahrzeug und einem Ego-Fahrzeug führt, wobei das Fahrassistenzsystem eingerichtet wird, um mit der simulierten Umgebung und somit mit dem Simulationsrechner, insbesondere in Echtzeit, Daten auszutauschen.

Unter Echtzeit versteht man bevorzugt den Betrieb eines Simulationsrechners, bei dem Programme zur Verarbeitung anfallender Daten ständig betriebsbereit sind, derart, dass die Verarbeitungsergebnisse innerhalb einer vorgegebenen Zeitspanne verfügbar sind. Die Daten können je nach Anwendungsfall nach einer zeitlich zufälligen Verteilung oder zu vorherbestimmten Zeitpunkten anfallen. Durch die Hardware und Software wird bevorzugt sichergestellt, dass keine Verzögerungen auftreten, welche die Einhaltung dieser Bedingung verhindern könnten. Die Verarbeitung der Daten muss dabei im Allgemeinen nicht besonders schnell erfolgen, sie muss nur garantiert schnell genug für die jeweilige Simulationsanwendung erfolgen.

Bezogen auf die Simulation einer Umgebung sichert die Echtzeitfähigkeit des Simulationsrechners, dass das Programm oder die Datenverarbeitung (nahezu) simultan mit den entsprechenden Prozessen in der Realität abläuft.

Dabei ist das Fahrassistenzsystem, das bevorzugt als Steuergerät ausgebildet ist, eingerichtet, um in einer Kollisionssituation das Fahrverhalten des Ego-Fahrzeugs zu beeinflussen, insbesondere um ein Bremsmanöver oder ein Ausweichmanöver durchzuführen.

Hierbei wird dem Fellow-Fahrzeug eine Eintreffgeschwindigkeit vorgegeben, mit welcher es am Kollisionsort ankommt oder zumindest ankommen soll. Durch den Kollisionsort und die Geschwindigkeit des Fellow-Fahrzeuges, insbesondere auch der Geschwindigkeit des Ego-Fahrzeuges und bevorzugt auch dessen Position und insbesondere dessen Abstand zum Kollisionsort wird somit die Kollisionssituation definiert und kann insbesondere auch anhand dieser Parameter in der Simulationsumgebung, bzw. dem Simulationsrechner zum Zweck der Simulationsberechnung hinterlegt werden. Insbesondere die Geschwindigkeit und/oder die Position des Ego-Fahrzeuges kann ein Fahrparameter sein, welcher dem Simulationsrechner übermittelt wird, um die iterative Simulation der Fahrt des Fellow-Fahrzeuges zu rechnen.

Die Erfindung sieht vor, dass zyklisch für jeden Zyklus die Position des gesteuert fahrenden Ego-Fahrzeuges, insbesondere der Abstand des gesteuert, insbesondere unvorhersehbar z.B. durch einen Menschen oder Autopiloten gesteuert fahrenden Ego-Fahrzeuges zu dem Kollisionsort und dessen aktuelle Geschwindigkeit ermittelt wird. Hierdurch wird die Fahrt des Ego-Fahrzeuges zwar nicht für die Zukunft deterministisch vorhergesagt, aber die in jedem Zyklus zurückgelegte Teilfahrt kann anhand der genannten Parameter in die Steuerung des Fellow-Fahrzeuges einfließen, so dass erfindungsgemäß quasi nachträglich die Fahrt des Fellow-Fahrzeuges in der Simulation an die Fahrt des Ego-Fahrzeuges angepasst werden kann, insbesondere mit dem Ziel, dass das Fellow-Fahrzeug den Kollisionsort mit den gewünschten die Kollisionssituation beschreibenden Parametern erreicht, somit also bevorzugt mit der vorgegebenen Geschwindigkeit am Kollisionsort ist, wenn das Ego-Fahrzeug eine vorgegebene Position, insbesondere einen vorgegebenen Abstand zum Kollisionsort hat, insbesondere den Abstand Null.

Dies erfolgt erfindungsgemäß für jeden Zyklus, insbesondere durch den Simulationsrechner für das Fellow-Fahrzeug, derart, dass eine Sollposition, insbesondere ein Sollabstand, berechnet wird, die/den das Fellow-Fahrzeug zum Kollisionsort haben müsste, damit es unter der Annahme des Fahrens mit der vorgegebenen Eintreffgeschwindigkeit zu einer gewünschten Zeit, insbesondere zeitgleich mit dem Ego-Fahrzeug, am Kollisionsort eintrifft.

Diese Sollposition oder dieser Sollabstand des Fellow-Fahrzeuges wird einem Regelkreis vorgegeben, der die Position des Fellow-Fahrzeuges entlang der Trajektorie regelt, wobei durch den Regelkreis, insbesondere durch Änderung der Geschwindigkeit des Fellow-Fahrzeuges, die Differenz zwischen der tatsächlichen Position und der Sollposition oder zwischen dem tatsächlichen Abstand zum Kollisionsort und dem Sollabstand verringert wird. Diese Verringerung erfolgt bevorzugt im nachfolgenden Zyklus im Vergleich zum vorherigen Zyklus, in welchem der Sollabstand bestimmt wurde.

Der Regelkreis ist bevorzugt in Software auf dem Simulationsrechner implementiert, insbesondere welcher in bevorzugter Ausgestaltung in einem realen Ego-Fahrzeug mitgeführt wird. Der Regelkreis kann in einen übergeordneten Regelkreis eingebunden sein, in welchem die aktuelle (im betrachteten Zyklus) Position des Fellow-Fahrzeuges rückgekoppelt wird, um die hiervon abhängige vorzugebende Geschwindigkeit des Fellow-Fahrzeuges zu bestimmen.

Die Bestimmung der Sollposition des Fellow-Fahrzeuges oder des Sollabstandes des Fellow-Fahrzeuges vom Kollisionsort in Abhängigkeit der Eintreffgeschwindigkeit stellt normalerweise sicher, dass bei Erreichen des Kollisionsortes das Fellow-Fahrzeug auch die vorgegebene Eintreffgeschwindigkeit hat. Sofern das nicht der Fall sein sollte, aber auch allgemein kann es vorgesehen sein, dass im Simulationsrechner mit Erreichen des Kollisionsortes oder in einer örtlichen Umgebung vor dem Kollisionsort oder zeitlichen Umgebung vor Erreichen des Kollisionsortes die Geschwindigkeit des Fellow-Fahrzeuges erzwungen auf die Eintreffgeschwindigkeit gesetzt wird.

Bei der vorgenannten Regelung der simulierten Fahrt des Fellow-Fahrzeuges kann es in einer möglichen Variante vorgesehen sein, dass die Änderung der Geschwindigkeit und/oder der Position des Fellow-Fahrzeuges in jedem der Zyklen vorgenommen wird unter der Annahme, dass das Fellow-Fahrzeug die Masse Null hat. Hierdurch wird sichergestellt, dass das Fellow-Fahrzeug beliebig schnell auf die Steuerungen eines Menschen, der das Ego-Fahrzeug real oder im Fahrsimulator fährt, reagieren kann.

Auch wird hierdurch das Ziel erreicht, dass sich das Fellow-Fahrzeug beim Eintreffen des Ego-Fahrzeugs am Kollisionsort ebenfalls am Kollisionsort befindet und die vorgegebene Eintreffgeschwindigkeit hat. Die Regelung kann hierbei vorsehen, dass die in der Fahrsimulation im Iterationszyklus erreichte Ist-Position einfacherweise auf die Soll-Position bzw. der Ist-Abstand zum Kollisionsort auf den Soll-Abstand zum Kollisionsort korrigiert wird, was bedeutet, dass das Fahrzeug beliebig schnell beschleunigen kann und mit beliebig großer Geschwindigkeit fahren kann. Z.B. kann nach diesem "Setzen auf die Sollposition" die Fahrt simuliert mit der Eintreffgeschwindigkeit fortgeführt werden, insbesondere bis im nächsten Zyklus erneut die Positionsbestimmung des Ego-Fahrzeuges stattfindet.

Problematisch oder ungewünscht kann bei dieser Art der Regelung sein, dass das simulierte Fellow-Fahrzeug kein realistisches physikalisches Fahrverhalten aufweist. Bei der Prüfung von Fahrassistenzsystemen kann jedoch hierauf ggfs. Wert gelegt werden, um auch der Realität entsprechende Annäherungen des Fellow-Fahrzeuges an den Kollisionsort, somit also das realitätsnahe Eintreten der Kollisionssituation, zu erzeugen.

Um dies zu realisieren, kann die Erfindung in einer anderen Alternative vorsehen, dass die Änderung der Position des Fellow-Fahrzeuges dynamisch erfolgt durch eine Änderung der Geschwindigkeit des Fellow-Fahrzeuges gemäß einem mathematischen dynamischen Model, welches eine reale Fahrzeugdynamik berücksichtigt, insbesondere eine Fahrzeugmasse und ein Beschleunigungsvermögen des Fellow-Fahrzeuges berücksichtigt. Ein solches Modell kann im Simulationsrechner zur Berechnung der Fahrt des Fellow-Fahrzeuges verwendet werden, um die Geschwindigkeit des Fellow-Fahrzeuges zu regeln. Hierdurch weist das Fellow-Fahrzeug ein realistisches physikalisches Beschleunigungs- und Bremsverhalten auf. Es wird also versucht, die Differenz zwischen der Ist-Position des Fellow-Fahrzeuges und der Soll-Position bzw. dem Ist-Abstand und dem Soll-Abstand zum Kollisionsort durch Beschleunigen oder Abbremsen zu verringern.

Die Bestimmung der Position des Ego-Fahrzeuges oder des Abstandes des Ego-Fahrzeuges zum Kollisionsort kann in einer einfachen Ausführung durch Messung der Länge der Luftlinie zwischen dem Ego-Fahrzeug und dem Kollisionsort erfolgen. Wenngleich bei einer an sich gekrümmten Fahrtrajektorie sich der tatsächliche Abstand als größer erweist als der in Luftlinie gemessene Abstand, reduziert sich dieser Fehler zunehmend mit Verringerung des Abstandes, so dass diese Vereinfachung allenfalls Auswirkungen hat auf die Realitätsnähe der Regelung der Fahrt des Fellow-Fahrzeuges, sofern bei diesem das eingangs genannte dynamische Modell Verwendung findet.

Bevorzugt wird der Abstand des Ego-Fahrzeuges zum Kollisionsort entlang einer gekrümmten Soll-Trajektorie ermittelt, insbesondere die dem Simulationsrechner vorgegeben ist. Diese Soll-Trajektorie kann z.B. der Mittellinie der Fahrspur der genutzten realen oder auch simulierten Straße entsprechen.

Bei dieser Ausführung wird der Abstand zum Kollisionsort zwar im Simulationsrechner anhand von Daten der simulierten Umgebung berechnet, die Berechnung beruht hingegen ebenso auf wenigstens einem Fahrparameter des Ego-Fahrzeuges. Bei einem realen Fahrzeug kann das die in der realen Umgebung gemessene Position sein, die in die entsprechende Position in der simulierten Umgebung übertragen wird, wofür der wenigstens eine Positionsmesswert über einen Dateneingang an den Simulationsrechner übergeben wird.

Die Erfindung kann vorsehen, dass die simulierte Umgebung in Abhängigkeit einer realen Umgebung erzeugt wird, in welcher das reale Ego-Fahrzeug fährt, insbesondere wobei die simulierte Umgebung, insbesondere ein diese beschreibender Datensatz, auf den Simulationsrechner geladen wird. Dafür kann z.B. die reale Teststrecke durch Messdatenerfassung von dieser realen Teststrecke digitalisiert und in den Simulationsrechner geladen werden. Es kann vorgesehen werden, dass das Ego-Fahrzeug selbst durch ein Abfahren der Teststrecke die Teststrecke vermisst und anhand der Messdaten die Teststrecke virtualisiert wird. Die simulierte Umgebung inkl. der darin befindlichen Teststrecke, welche eine reale Teststrecke nachbildet kann auch durch eine Modellierungssoftware gebildet und hiernach in den Simulationsrechner geladen werden.

Die Soll-Trajektorie, die auf der simulierten virtuellen Teststrecke in der simulierten Umgebung angeordnet wird, kann einem Fahrer, der das Ego-Fahrzeug führt, z.B. auf einem Bildschirm oder Head-Up-Display visualisiert werden, damit der Fahrer ggfs. vorhandene Abweichungen von dieser durch Lenken kompensieren kann. Alternativ können statt einer Visualisierung der Soll-Trajektorie auch nur Informationen über evtl. Abweichungen von dieser dem Fahrer angezeigt werden.

Bei der vorgenannten Ausführung, aber auch allen anderen nachfolgend beschriebenen Ausführungen, kann ein Fahrer von der Soll-Trajektorie abweichen, insbesondere hiernach diesen Fehler nicht korrigieren. In diesem Fall kann es vorgesehen sein, dass der Kollisionspunkt hinsichtlich seiner Position aktualisiert wird. Die nachfolgenden Berechnungen der Simulation der Fahrt des Fellow-Fahrzeuges können sodann mit dem aktualisierten Kollisionspunkt erfolgen statt mit dem ursprünglich vorgegebenen. Aktualisierungen des Kollisionspunktes können mehrfach erfolgen, insbesondere in jedem Zyklus kann eine Aktualisierung möglich sein und ggfs. auch durchgeführt werden.

Bei einem simulierten Ego-Fahrzeug kann auch die Position des Gaspedales des Fahrsimulators den aus der realen Welt stammenden Fahrparameter des Ego-Fahrzeuges bilden, der in den Simulationsrechner übertragen wird über eine Datenschnittstelle, um im Simulationsrechner auch die Fahrt des Ego-Fahrzeuges zu rechnen und anhand der simulierten Fahrt sodann die Position bzw. den Abstand zum Kollisionsort zu ermitteln.

Allgemein sehen somit alle Ausführungsvarianten vor, dass Daten, z.B. die Orts-Positionsdaten, in einer realen Umgebung, in welcher sich das reale Ego-Fahrzeug oder dessen Fahrsimulator befindet, anhand realer Messwertaufnehmer erfasst werden und diese Daten an den Simulationsrechner übermittelt werden, um mit diesem die Position des Ego-Fahrzeuges auf der virtuellen Teststrecke oder den Abstand des Ego-Fahrzeuges zum Kollisionsort zu bestimmen.

Bei einer Ausführung, in welcher ein Autopilot als Software-Implementierung ein reales Ego-Fahrzeug oder einen Fahrsimulator steuert, werden ebenso dieselben realen Meßwerte mit Messwertaufnehmern (Sensoren) aus der realen Welt erfasst. Hier ersetzt quasi nur der Autopilot den Menschen, er bedient aber dieselben Fahrzeugkomponenten, die ansonsten ein Mensch bedienen würde.

Die Erfindung kann in allen Ausführungen vorsehen, dass dem Regelkreis eine letzte bereits auf der Trajektorie des Fellow-Fahrzeuges erreichte Position des Fellow-Fahrzeuges als eine nicht zu unterschreitende Grenzposition vorgegeben wird oder der Regelkreis dem Fellow-Fahrzeug die Geschwindigkeit nur in einem Bereich größer gleich Null vorgibt. Hierdurch wir erzielt, dass bei der simulierten Fahrt das Fellow-Fahrzeug keine Rückwärtsfahrt vornimmt, sondern sich immer nur auf den Kollisionsort zubewegt, allenfalls stehenbleibt.

Bei der Simulation auch der Fahrt des Ego-Fahrzeuges kann es grundsätzlich vorgesehen sein, dass diese Simulation auf einem Simulationsrechner gerechnet wird, der separat ist vom Simulationsrechner des Fellow-Fahrzeuges. Hier reichert dann die Simulation des Fellow-Fahrzeuges die simulierte Fahrt des Ego-Fahrzeuges mit Ereignissen oder Elementen an, insbesondere dem Erscheinen des Fellow-Fahrzeuges vor dem Ego-Fahrzeug, dadurch, dass der Simulationsrechner des Fellow-Fahrzeuges die Eingänge des Steuergerätes des Fahrassistenzsystems im Simulationsrechner des Ego-Fahrzeuges mit Daten versorgt.

Eine Ausführung kann aber auch vorsehen, dass zur Simulation der Fahrt des Ego-Fahrzeuges und der Fahrt des Fellow-Fahrzeuges derselbe Simulationsrechner verwendet wird.

Grundsätzlich kann in diesen Ausführungen das Steuergerät nur simuliert sein in der Simulationsumgebung des Ego-Fahrzeuges, so dass die Dateneingänge des Steuergerätes virtuell sind.

Bevorzugt sieht die Erfindung jedoch auch bei einer simulierten Fahrt des Ego-Fahrzeuges vor, dass ein reales Steuergerät des Fahrassistenzsystems im Fahrsimulator bzw. dem Simulationsrechner des Ego-Fahrzeuges oder beider Fahrzeuge verbaut ist. Somit ist das zu testende Fahrassistenzsystem ein reales, lediglich das Auto, in welches dieses verbaut ist, ist virtuell.

Die Fahrparameter werden, wie eingangs erläutert, von einem Fahrsimulator vorgegeben, der mindestens ein Bedienelement eines Fahrzeuges in physischer Form nachbildet, insbesondere das von einem Menschen oder einem Autopiloten bedient wird.

Die bevorzugte Ausführung ist es, dass die Fahrt des Ego-Fahrzeuges eine Fahrt mit einem realen Fahrzeug ist und in dem Fahrzeug ein Simulationsrechner mitgeführt wird, welcher die simulierte Umgebung und das darin fahrende Fellow-Fahrzeug erzeugt, wobei Simulationsdaten des Simulationsrechners dem realen, das Fahrassistenzsystem ansteuernden Steuergerät des Ego-Fahrzeuges als simulierte reale Daten übertragen werden. Das reale Fahrzeug wird dabei von einem Menschen gefahren oder von einem computergesteuerten Autopiloten gefahren in Abhängigkeit von messtechnisch erfassten realen Umgebungsdaten.

Um Positionsdaten eines realen Ego-Fahrzeuges in der realen Welt messtechnisch zu erhalten sieht die Erfindung besonders bevorzugt vor, dass die Position mittels einer differentiellen Satelliten-Navigation bestimmt wird, insbesondere um die Genauigkeit gegenüber üblicher Satellitennavigation zu erhöhen.

Dafür kann die mit Satellitennavigation gemessene Position des Ego-Fahrzeuges korrigiert werden mittels einer Referenz, deren Position bekannt ist und deren Position ebenso auch durch die Satellitennavigation bestimmt wird. Dieses Verfahren zur Positionsbestimmung ist unter dem Begriff "Differential GPS" oder kurz DGPS bekannt. Der hierbei ermittelte Fehler kann zur Korrektur des Fehlers bei der Position des Ego-Fahrzeuges herangezogen werden. Unabhängig von der konkreten Art der Erfassung werden die realen Positionsdaten wie eingangs erwähnt an den Simulationsrechner übertragen zur Regelung der simulierten Fahrt des Fellow-Fahrzeuges in Abhängigkeit dieser realen Positionsdaten. Aus den realen Positionsdaten werden bevorzugt dafür zunächst, bevorzugt übereinstimmende, virtuelle Positionsdaten des Ego-Fahrzeuges auf der virtuellen, simulierten Teststrecke, bzw. der Soll-Trajektorie bestimmt. Die Regelung der Fahrt des Fellow-Fahrzeuges kann dann in Abhängigkeit der in der simulierten Umgebung vorliegenden virtuellen Positionsdaten des Ego-Fahrzeuges erfolgen.

In einer mit allen vorherigen Ausführungen kombinierbaren Weiterbildung kann die Erfindung vorsehen, dass innerhalb eines vorbestimmten räumlichen Intervalls vor dem Kollisionsort oder innerhalb eines vorbestimmten zeitlichen Intervalls vor dem Kollisionszeitpunkt eine Geschwindigkeitsregelung des Fellow-Fahrzeuges abgeschaltet wird und das Fellow-Fahrzeug simuliert weiterfährt mit der bis zur Abschaltung erreichten Geschwindigkeit oder mit der vorbestimmten Eintreffgeschwindigkeit.

Alternativ kann die Erfindung vorsehen, dass in Reaktion auf ein Ansprechsignal des zu testenden Steuergerätes des Ego-Fahrzeuges, insbesondere in Reaktion auf ein Ansprechsignal eines in Software und/oder Hardware realisierten Unfallvermeidungsassistenten des Steuergerätes, die Geschwindigkeitsregelung des Fellow-Fahrzeuges abgeschaltet wird und das Fellow-Fahrzeug simuliert weiterfährt mit der bis zur Abschaltung erreichten Geschwindigkeit oder mit der vorbestimmten Eintreffgeschwindigkeit. Das Ansprechsignal kann z.B. an einem Signalausgang des konkreten zu testenden Fahrassistenzsystem-Steuergerätes abgegriffen werden, um es dem Simulationsrechner zur Verfügung zu stellen. Z.B kann ein Interrupteingang des Simulationsrechners angesteuert werden. Alternativ kann durch das Ansprechsignal oder das Eintreten der zuvor genannten Intervall-Bedingung eine softwaretechnische Verzweigungsbedingung erzeugt werden, die bewirkt, dass der Geschwindigkeitsregelkreis übergangen wird, insbesondere jedoch die Fahrsimulation mit dem bislang gespeicherten Fahrparametern weitergeführt wird.

Durch beide Maßnahmen wird verhindert, dass der Regelkreis, der die Fahrt des Fellow-Fahrzeuges bestimmt, auf eine Reaktion des Fahrassistenzsystems seinerseits reagiert.

Die Erfindung wird anhand der beigefügten Figur erläutert, welche eine Straßenkreuzung darstellt, auf welcher eine tatsächliche Kollision im Kollisionspunkt KP zwischen dem Ego-Fahrzeug 1 und dem Fellow.-Fahrzeug 2 simuliert werden soll. Die Figur verbildlicht hierbei die physikalischen Zusammenhänge. Die Trajektorien von Ego-Fahrzeug 1 und Fellow-Fahrzeug 2 verlaufen hier jeweils mittig auf der rechten Fahrspur der Streckenführung und treffen, d.h. kreuzen sich im dargestellten Kollisionspunkt KP.

Angenommen wird, dass beide Fahrzeuge Ihre eigene Ortskoordinate S1 bzw. S2 zugeordnet bekommen, welche für jedes Fahrzeug eine Null-Position in einem Abstand zum Kollisionspunkt KP auf dem vom jeweiligen Fahrzeuge befahrenen Streckenstück an der Position S1=0 für das Ego-Fahrzeug bzw. S2=0 für das Fellow-Fahrzeug umfasst. Der Kollisionspunkt befindet sich aus Sicht des Ego-Fahrzeugs an einer Position S1_{KP} und aus Sicht des Fellow-Fahrzeugs an einer Position S2_{KP}. An den Null-Positionen starten beide Fahrzeuge ihre jeweilige Fahrt, wobei erfindungsgemäß die Fahrt des Fellow-Fahrzeuges 2 iterativ an die Fahrt des Ego-Fahrzeuges 1 angepasst wird.

Betrachtet wird hier eine Situation, in welcher das von einem Menschen gesteuerte Ego-Fahrzeug bereits eine Strecke zurückgelegt hat. Diese Strecke beträgt Sᵥₑₕ₁. Das Ego-Fahrzeug hat dabei eine aktuelle Geschwindigkeit Vᵥₑₕ₁ und bis zum Kollisionsort KP noch einen Abstand von ΔSᵥₑₕ₁.

In der erfindungsgemäßen Regelung liegt diese Situation innerhalb eines bestimmten von mehreren Regelzyklen vor.

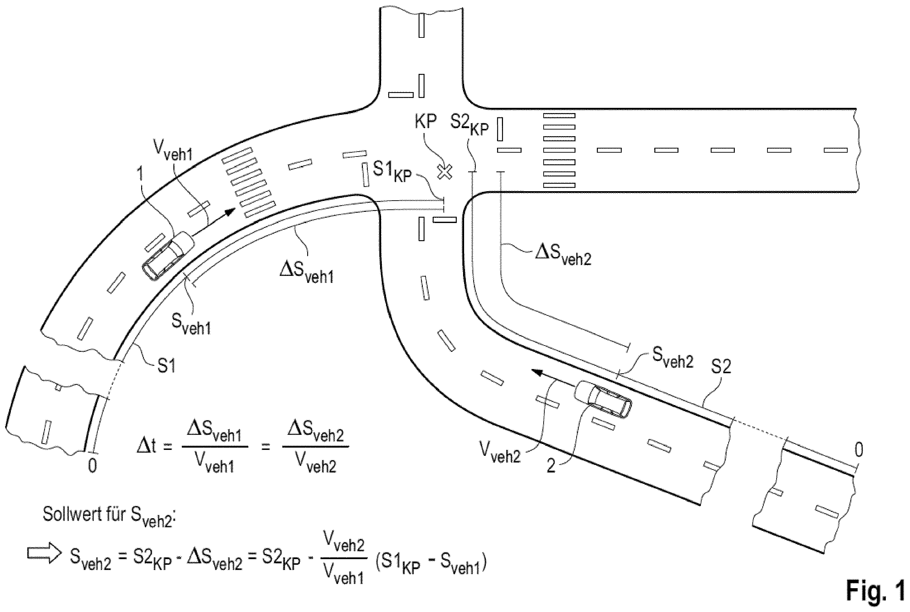

Gemäß der in der Figur 1 dargestellten Formel ergibt sich daraus eine Zeit Δt, die das Ego-Fahrzeug 1 noch benötigt, um bei der aktuellen Geschwindigkeit Vᵥₑₕ₁ am Kollisionsort KP anzukommen.

Dieselbe Zeit muss für das Fellow-Fahrzeug gelten, damit beide Fahrzeuge zeitgleich den Kollisionsort KP erreichen. Dabei wird vorgegeben, dass das Fellow-Fahrzeug mit der Eintreffgeschwindigkeit Vᵥₑₕ₂ am Kollisionsort KP ankommen soll. Damit dies der Fall ist, müsste also das Fellow-Fahrzeug zum Kollisionsort KP den Soll-Abstand ΔS_{Veh2} aufweisen, bzw. von seinem Startort S2 aus betrachtet die Soll-Strecke S_{Veh2} relativ zum Startpunkt zurückgelegt haben. Die Soll-Strecke S_{Veh2} ergibt sich gemäß der in der Figur 1 dargestellten Formel aus der Zeit Δt.

In der Simulation hat das Fellow-Fahrzeug beispielsweise (nicht visualisiert) eine geringere Strecke zurückgelegt bzw. noch einen größeren Abstand zum Kollisionsort KP und fährt mit einer Geschwindigkeit, die der Eintreffgeschwindigkeit entspricht oder auch von der Eintreffgeschwindigkeit abweichen kann.

Dieser Abstand bzw. diese Position werden demnach einem Regelkreis vorgegeben. Dieser kann einfacherweise die Ist-Position auf die Soll-position bzw. den Ist-Abstand auf den Soll-Abstand korrigieren.

In einem dynamischen Bewegungsmodell des Fellow-Fahrzeuges wird hingegen bevorzugt für den nächsten Iterationszyklus der Regelung eine neue Geschwindigkeit für das Fellow-Fahrzeug als Sollgeschwindigkeit vorgegeben, um in dem nachfolgenden Zyklus die Differenz zwischen Sollabstand und Ist-Abstand bzw. Sollposition und Ist-Position zu verringern. Um dies im genannten Beispiel zu erzielen wird der Regelalgorithmus das Fellow-Fahrzeug in der Simulation beschleunigen.

Die vorzugebende Sollgeschwindigkeit ist eine Funktion von der aktuellen Position des Fellow-Fahrzeuges. Insofern kann es vorgesehen sein, dass die Sollgeschwindigkeit in einem übergeordneten Regelkreis bestimmt wird, welchem die aktuelle Position rückgekoppelt wird.

## Patentansprüche

1. Verfahren zur Simulation einer Kollisionssituation zwischen zwei Fahrzeugen (1, 2) zum Testen eines Fahrassistenzsystems, insbesondere eines als Kraftfahrzeug-Steuergerät ausgestalteten Fahrassistenzsystems, **dadurch gekennzeichnet, dass**
a. in einer durch einen Simulationsrechner simulierten Umgebung einem simulierten Fellow-Fahrzeug (2) eine Trajektorie zugeordnet wird, auf welcher sich das Fellow-Fahrzeug (2) bewegt und die durch einen Kollisionsort (KP) einer beabsichtigten Kollision zwischen dem Fellow-Fahrzeug (2) und einem Ego-Fahrzeug (1) führt,
b. das Fahrassistenzsystem eingerichtet wird, um mit der simulierten Umgebung, insbesondere in Echtzeit, Daten auszutauschen, wobei das Fahrassistenzsystem eingerichtet ist, um in einer Kollisionssituation das Fahrverhalten des Ego-Fahrzeugs (1) zu beeinflussen, insbesondere um ein Bremsmanöver oder ein Ausweichmanöver durchzuführen,
c. dem Fellow-Fahrzeug (2) eine Eintreffgeschwindigkeit vorgegeben wird, mit welcher es am Kollisionsort (KP) ankommt oder zumindest ankommen soll,
d. zyklisch für jeden Zyklus die Position des gesteuert fahrenden Ego-Fahrzeuges (1), insbesondere der Abstand (ΔS_{Veh1}) des gesteuert, insbesondere unvorhersehbar gesteuert fahrenden Ego-Fahrzeuges (1), zu dem Kollisionsort (KP) und dessen aktuelle Geschwindigkeit (Vᵥₑₕ₁) ermittelt wird, insbesondere wobei die Ermittlung durch den Simulationsrechner auf der Basis von Daten der simulierten Umgebung erfolgt, und
e. für jeden Zyklus, insbesondere durch den Simulationsrechner, für das Fellow-Fahrzeug (2) eine Sollposition (S_{Veh2}) berechnet wird, insbesondere ein Sollabstand (ΔS_{Veh2}) berechnet wird, die/den das Fellow-Fahrzeug (2) zum Kollisionsort (KP) haben müsste, damit es unter der Annahme des Fahrens mit der vorgegebenen Eintreffgeschwindigkeit zu einer gewünschten Zeit, insbesondere zeitgleich mit dem Ego-Fahrzeug (1), am Kollisionsort (KP) eintrifft,
f. einem Regelkreis, der die Position des Fellow-Fahrzeuges (2) entlang der Trajektorie regelt, die Sollposition (S_{Veh2}) oder der Sollabstand (ΔS_{Veh2}) des Fellow-Fahrzeuges (2) vorgegeben wird und durch den Regelkreis, insbesondere durch Änderung der Geschwindigkeit des Fellow-Fahrzeuges (2), die Differenz zwischen der tatsächlichen Position und der Sollposition (S_{Veh2}) oder dem tatsächlichen Abstand zum Kollisionsort und dem Sollabstand (ΔS_{Veh2}) verringert wird, insbesondere im nachfolgenden Zyklus im Vergleich zum vorherigen Zyklus.

2. Verfahren nach Anspruch 1, **dadurch gekennzeichnet, dass** die Änderung der Position und/oder der Geschwindigkeit des Fellow-Fahrzeuges (2) vorgenommen wird unter der Annahme, dass das Fellow-Fahrzeug (2) die Masse Null hat.

3. Verfahren nach Anspruch 1, **dadurch gekennzeichnet, dass** die Änderung der Geschwindigkeit des Fellow-Fahrzeuges (2) vorgenommen wird gemäß einem mathematischen dynamischen Model, welches eine reale Fahrzeugdynamik berücksichtigt, insbesondere eine Fahrzeugmasse und ein Beschleunigungsvermögen berücksichtigt.

4. Verfahren nach einem der vorherigen Ansprüche, **dadurch gekennzeichnet, dass** die Position (S_{Veh1}) des Ego-Fahrzeuges (1), insbesondere der Abstand (ΔS_{Veh1}) des Ego-Fahrzeuges (1) zum Kollisionsort (KP) entlang einer bevorzugt gekrümmten Soll-Trajektorie ermittelt wird, insbesondere die dem Simulationsrechner vorgegeben ist.

5. Verfahren nach einem der vorherigen Ansprüche, **dadurch gekennzeichnet, dass** dem Regelkreis eine letzte bereits auf der Trajektorie erreichte Position des Fellow-Fahrzeuges (2) als eine nicht zu unterschreitende Grenzposition vorgegeben wird oder der Regelkreis dem Fellow-Fahrzeug (2) die Geschwindigkeit nur in einem Bereich größer-gleich Null vorgibt.

6. Verfahren nach einem der vorherigen Ansprüche, **dadurch gekennzeichnet, dass** die Fahrt des Ego-Fahrzeuges (1) eine simulierte Fahrt ist, die auf demselben Simulationsrechner gerechnet wird, der die Fahrt des Fellow-Fahrzeuges (2) regelt, wobei die Beschleunigung und die Fahrtrichtung des Ego-Fahrzeuges (1) von einem Fahrsimulator vorgegeben werden, der mindestens ein Bedienelement eines Fahrzeuges in physischer Form nachbildet.

7. Verfahren nach einem der vorherigen Ansprüche, **dadurch gekennzeichnet, dass** die Fahrt des Ego-Fahrzeuges (1) eine Fahrt mit einem realen Fahrzeug ist und in dem Fahrzeug ein Simulationsrechner mitgeführt wird, welcher die simulierte Umgebung und das darin fahrende Fellow-Fahrzeug (2) erzeugt, wobei Simulationsdaten des Simulationsrechners dem realen, das Fahrassistenzsystem ansteuernden Steuergerät des Ego-Fahrzeuges (1) als simulierte reale Daten übertragen werden.

8. Verfahren nach Anspruch 7, **dadurch gekennzeichnet, dass** die simulierte Umgebung in Abhängigkeit einer realen Umgebung erzeugt wird, in welcher das reale Ego-Fahrzeug (1) fährt, insbesondere wobei die simulierte Umgebung, insbesondere ein die simulierte Umgebung beschreibender Datensatz, auf den Simulationsrechner geladen wird.

9. Verfahren nach Anspruch 7 oder 8, **dadurch gekennzeichnet, dass** das reale Ego-Fahrzeug (1) von einem Menschen gefahren wird oder von einem computergesteuerten Autopiloten gefahren wird in Abhängigkeit von messtechnisch erfassten realen Umgebungsdaten.

10. Verfahren nach einem der Ansprüche 7 bis 9, **dadurch gekennzeichnet, dass** die Positionsdaten des realen Ego-Fahrzeuges (1) in der realen Welt messtechnisch erfasst werden, insbesondere mittels einer differentiellen Satelliten-Navigation, und die realen Positionsdaten an den Simulationsrechner übertragen werden zur Regelung der simulierten Fahrt des Fellow-Fahrzeuges (2) in Abhängigkeit dieser realen Positionsdaten.

11. Verfahren nach einem der vorherigen Ansprüche, **dadurch gekennzeichnet, dass** innerhalb eines vorbestimmten räumlichen Intervalls vor dem Kollisionsort (KP) oder innerhalb eines vorbestimmten zeitlichen Intervalls vor dem Kollisionszeitpunkt eine Geschwindigkeitsregelung des Fellow-Fahrzeuges (2) abgeschaltet wird und das Fellow-Fahrzeug (2) simuliert weiterfährt mit der bis zur Abschaltung erreichten Geschwindigkeit oder mit der vorbestimmten Eintreffgeschwindigkeit .

12. Verfahren nach einem der vorherigen Ansprüche, **dadurch gekennzeichnet, dass** in Reaktion auf ein Ansprechsignal des zu testenden Steuergerätes des Ego-Fahrzeuges (1), insbesondere in Reaktion auf ein Ansprechsignal eines in Software und/oder Hardware realisierten Unfallvermeidungsassistenten des Steuergerätes, die Geschwindigkeitsregelung des Fellow-Fahrzeuges (2) abgeschaltet wird und das Fellow-Fahrzeug (2) simuliert weiterfährt mit der bis zur Abschaltung erreichten Geschwindigkeit oder mit der vorbestimmten Eintreffgeschwindigkeit.
